**Europäisches Patentamt**

**European Patent Office**

**Office européen des brevets**

(19)

(11) Veröffentlichungsnummer: **0 210 263**
**B1**

(12) **EUROPÄISCHE PATENTSCHRIFT**

(45) Veröffentlichungstag der Patentschrift: **08.08.90**

(21) Anmeldenummer: **86901332.6**

(22) Anmeldetag: **05.02.86**

(86) Internationale Anmeldenummer:
**PCT/DE86/00037**

(87) Internationale Veröffentlichungsnummer:
**WO 86/04676 14.08.86 Gazette 86/18**

(51) Int. Cl.⁵: **G 01 N 21/47, G 01 B 11/30**

(54) **VORRICHTUNG ZUR OPTISCHEN ERMITTLUNG VON GESTALTSFEHLERN NIEDRIGER ORDNUNG.**

(30) Priorität: **05.02.85 DE 3503858**

(43) Veröffentlichungstag der Anmeldung:
**04.02.87 Patentblatt 87/06**

(45) Bekanntmachung des Hinweises auf die
Patenterteilung:
**08.08.90 Patentblatt 90/32**

(84) Benannte Vertragsstaaten:.
**AT BE CH DE FR GB IT LI LU NL SE**

(56) Entgegenhaltungen:
**EP-A- 110 146**
**EP-A- 145 957**
**US-A-3 866 038**
**US-A-4 390 277**
**US-A-4 411 528**
**US-A-43 773 41**

**Optics Communications, Band 46, Nr.1, Juni
1983 Amsterdam (NL) D. Bertani et al.: "A fast
optical profilometer" Seiten 1-3**

(73) Patentinhaber: **Optische Werke G. Rodenstock
Isartalstrasse 43
D-8000 München 5 (DE)**

(73) Patentinhaber: **Daimler Benz Aktiengesellschaft
Stuttgart-Untertürkheim Postfach 202
D-7000 Stuttgart 60 (DE)**

(72) Erfinder: **RAU, Norbert
Alemannerstrasse 19
D-7312 Kirchheim/Teck (DE)**
Erfinder: **HÜBNER, Gerd
Heimlingweg 3
D-7000 Stuttgart 70 (DE)**
Erfinder: **STAIGER, Wolfgang
Hohenstaufenstrasse 27
D-7141 Möglingen (DE)**
Erfinder: **BRODMANN, Rainer
Jagdfeldring 72
D-8013 Haar (DE)**
Erfinder: **GERSTORFER, Oskar
Ackerstrasse 16
D-8060 Dachau (DE)**

(74) Vertreter: **Münich, Wilhelm, Dr. et al
Kanzlei Münich, Steinmann, Schiller
Willibaldstrasse 36/38
D-8000 München 21 (DE)**

**EP  0 210 263  B1**

(56) Entgegenhaltungen:
Optical Ingineering, Band 24, Nr. 3, Juni 1985,
Bellingham WA (USA) R. Brodmann et al.:
"Optical roughness measuring instrument for
fine-machined surfaces", Seiten 408-419

Patents Abstracts of Japan, Bd. 6, Nr. 121
(P-126)(999) 6. Juli 1982, & JP-A-5749805

## Beschreibung

### Technisches Gebiet

Die Erfindung bezieht sich auf eine Vorrichtung zur Ermittlung von Gestaltsabweichungen niedriger Ordnung und insbesondere von Gestaltsabweichungen erster und zweiter Ordnung.

Gestaltsabweichungen der ersten bis dritten Ordnung werden als Unebenheiten, Wellen bzw. Rillen bezeichnet. (Gestaltsabweichungen zweiter Ordnung werden manchmal auch als "Rattermarken" bezeichnet.) Derartige Gestaltsabweichungen und insbesondere Gestaltsabweichungen zweiter Ordnung führen beispielsweise bei Lagerflächen von Getriebwellen im niederfrequenten Bereich zu Geräuschentwicklungen, wie Pfeifen. Das Auftreten von Pfeifen erfordert zum Ausbau der Welle die Demontage des Getriebes. Um diesen Aufwand zu vermeiden, wäre es wünschenswert, beispielsweise bei der Getriebemontage sämtliche Wellen vor dem Einbau auf das Auftreten von Gestaltsabweichungen bzw. Formfehlern niedriger Ordnung und insbesondere auf das Auftreten von geräuschverursachenden Rattermarken zu untersuchen.

### Stand der Technik

Gestaltsabweichungen niedriger Ordnung werden bislang industriell nur mit mechanischen Formprüfgeräten, beispielsweise mit dem "Perthen-Formtester" der Fa. Mahr gemessen. Die mechanische Formprüfung hat jedoch nicht nur den Nachteil, daß sie verhätnismäßig viel Zeit in Anspruch nimmt, sondern es ist auch ein großer Aufwand zur Durchführung der Formprüfung erforderlich: Beispielsweise muß der Prüfstand frei von niederfrequenten Gebäudeschwingungen sein.

Trotzdem zeigt sich, daß auch bei großem gerätemäßigem Aufwand anhand der Ergebnisse der mechanischen Formprüfung nicht immer zuverlässig beurteilt werden kann, ob beispielsweise eine Getriebewelle im eingebauten Zustand "pfeift". Es ist deshalb bereits vorgeschlaten worden, Gestaltsabweichungen niedriger Ordnung optisch zu erfassen. Beispielsweise in der US—A—3,866,038, von der bei der Formulierung des Oberbegriffs des Anspruchs 1 ausgegangen wird, ist eine Vorrichtung zur optischen Ermittlung der Ebenheit von Oberflächen, also von Gestaltsfehlern niedriger Ordnung bekannt. Die Vorrichtung weist eine Lichtquelle auf, deren Licht den zu untersuchenden Körper abtastet. Eine Lichtempfangseinrichtung, die aus einer Vielzahl von zeilenförmig angeordneten Lichtempfangselementen besteht, empfängt das vom Körper reflektierte Licht.

Aus der Nummer des Lichtempfangselements, auf das der reflektierte Lichtstrahl auftrifft, bestimmt eine Auswerteeinheit den Neigungswinkel des abgetasteten Flächenelements des Körpers.

Bei einer derartigen Vorrichtung ist das "Auflösungsvermögen" durch die Größe eines Lichtempfangselements bestimmt. Folgerichtig ist — wie in Spalte 4, Zeile 54 ff. der US—A 3,866,038 ausgeführt — es für die Verbesserung der Auflösung erforderlich, die Zahl der Lichtempfangselemente zu erhöhen, oder anders ausgedrückt, ihre Abmessungen zu verkleinern.

Weiterhin beeinflussen Gestaltsabweichungen höherer Ordnung, beispielsweise die Rauhigkeit der Oberfläche aufgrund der durch die Rauhigkeit bedingten "Auffächerung" des Lichtstrahls vergleichsweise stark das Meßergebnis.

### Darstellung der Erfindung

Der Erfindung liegt die Aufgabe zugrunde, eine Vorrichtung zur optischen Ermittlung von Gestaltsabweichungen bzw. Oberflächenfehlern niedriger Ordnung anzugeben, mit der bei vergleichsweise geringem optischen und elektronischen Aufwand Gestaltsabweichungen niedriger Ordnung mit hoher Genauigkeit erfaßt werden können.

Diese Aufgabe wird erfindungsgemäß dadurch gelöst, daß von einer Vorrichtung gemäß dem Oberbegriff des Patentanspruchs 1, wie sie aus der US—A—3,866,038 bekannt ist, ausgegangen wird, und diese Vorrichtung durch die Merkmale des kennzeichnenden Teils weitergebildet wird.

Erfindungsgemäß ist erkannt worden, daß eine hochgenaue Winkelauflösung dadurch möglich wird, daß die Lichtempfangseinrichtung aus einer Vielzahl von zeilenförmig angeordneten Lichtempfangselementen besteht, und daß die Ausgangssignale aller Lichtempfangselemente zur Bestimmung des Neigungswinkels ausgewertet werden. Hierdurch ist es überraschenderweise möglich, Verschiebungen des Schwerpunkts des reflektierten Lichtstrahles aufzulösen, die wesentlich unter der Breite eines Lichtempfangselements liegen. Das erfindungsgemäße Verfahren hat dabei den weiteren überraschenden Vorteil, daß das erhaltene Meßergebnis praktisch nicht von Gestaltsabweichungen höherer Ordnung wie Rauhigkeit etc. beeinflußt wird. Trotzdem ermöglicht die erfindungsgemäße Vorrichtung das gleichzeitige Bestimmen mehrerer Meßgrößen, so der statistischen lokalen Rauhheit, der über den Meßfleck integrierten Rauhheit, der Welligkeit, Form- und Lageabweichung im integrierten Profil sowie der Sichtprüfung bzw. der Rattermarken im Steigungsprofil.

Durch die Veränderung der Meßfleckgröße kann darüberhinaus eine bestimmte Filterwirkung erzielt werden, mit der der Einfluß der Rauhheit auf das Meßsignal von dem Einfluß der Welligkeit getrennt werden kann.

Ein weiterer Vorteil der erfindungsgemäßen Vorrichtung ist, daß der optische Prüfkopf unempfindlicher als ein mechanischer Taster gegenüber Störschwingungen ist, die vom Prüfling ausgehen. Dies gilt sowohl für Schwingungsrichtungen in der Prüflingsfläche als auch senkrecht dazu.

Damit ist die Möglichkeit gegeben, die erfindungsgemäße Vorrichtung in eine Fertigungslinie zu integrieren. Auch ist die erfindungsgemäße Vorrichtung innerhalb eines vergleichsweise großen Bereichs weitgehend unempfindlich gegen Abstandsänderungen.

Insbesondere ist eine einfache Beziehung angegeben, nach der die Auswerteeinheit aus den Ausgangssignalen der einzelnen Lichtempfangselemente den Neigungswinkel des abgetasteten Flächenelements bestimmt. Diese Beziehung erlaubt es ohne großen Aufwand, Verschiebungen des Schwerpunkts des reflektierten Lichtstrahls auf der Lichtempfangselement-Zeile zu erfassen, die kleiner als 10% der Breite eines Lichtempfangselements sein können. Die erfindungsgemäß verwendete Beziehung erlaubt darüberhinaus die selbsttätige Ausrichtung der Vorrichtung an einer Ist-Oberfläche derart, daß die optische Achse in der Flächennormalen liegt. Damit ist im Gegensatz zu mechanischen Tastern keine Mehrfachantastung erforderlich.

Aus dem so erhaltenen Neigungswinkel der einzelnen Flächenelemente kann nach Anspruch 2 in einfacher Weise die Profilkurve des zu untersuchenden Körpers durch Integration ermittelt werden. Bei der erfindungsgemäßen Vorrichtung besteht damit eine Wahlmöglichkeit zwischen Steigungs- und Höhenprofil in Abhängigkeit beispielsweise vom Verhältnis Wellenamplitude/Wellenlänge oder von Funktionsanforderungen.

Ein besonderer Vorteil der erfindungsgemäßen Vorrichtung ist ihr gleichmäßiger Frequenzgang, d.h. ihre weitgehend konstante Übertragungsfunktion über einen großen Frequenzbereich. Dieser gleichmäßige Frequenzgang erlaubt es, das Ausgangssignal der Auswerteeinheit und/oder das Ausgangssignal der Integrationsschaltung über einen großen Frequenzbereich einer Fouriertransformation zu unterziehen. Aus dem so erhaltenen Fourier-Spektrum können in einfacher Weise Aussagen abgeleitet werden, die einen schnellen Überblick über die Qualität des Werkstücks erlauben: Beispielsweise sind für Rattermarken Maxima bei bestimmten Fourierordnungen charakteristisch. Anhand des Auftretens bzw. des Nichtauftretens dieser Ordnungen kann leicht entschieden werden, ob die Welle brauchbar ist oder ob nicht. Mittels der Fourieranalyse können beispielsweise die Winkelamplituden der der einzelnen Ordnungen, die Maximalwerte ermittelt und auf die entsprechenden Amplituden des Höhenprofils umgerechnet werden. Dadurch wird man unabhängig von möglichen Störstellen, wie Kratzern etc.

Im Anspruch 4 ist eine besonders vorteilhafte Ausbildung des optischen Teils der erfindungsgemäßen Vorrichtung gekennzeichnet. Durch das "schräge Auftreffen" des abtastenden Lichtstrahls kann auf einen Strahlteiler verzichtet werden, so daß die Intensität nicht herabgesetzt wird. Vor allem aber sorgt die beanspruchte Abstandbeziehung, nach der sowohl die zu untersuchende Oberfläche als auch die Lichtempfangseinrichtung von dem Linsensystem einen Abstand (gemessen zur jeweiligen Hauptebene des Linsensystems) haben, der in etwa gleich der Brennweite des Linsensystems ist, daß auf einem Lichtempfangselement die von der zu untersuchenden Oberfläche ausgehenden Strahlen auftreffen, die unter einem bestimmten Winkel von dem beleuchteten Flächenelement ausgehen.

Unabhängig hiervon kann die optische Achse aus der Flächennormale zur Modifikation des Gesichtsfelds der Vorrichtung geschwenkt werden.

Die Ausbildung der Vorrichtung gemäß Anspruch 5 unterdrückt den Einfluß von Rauhigkeit in der Oberfläche senkrecht zur Abtastrichtung; hierdurch wird die erzielbare Winkelauflösung weiter erhöht.

Durch die Abmessung des Lichtflecks in Abtastrichtung kann die kleinste noch erfaßte Wellenlänge von Gestaltsabweichungen festgelegt werden. Vorteilhafterweise wählt man die Abmessung des Lichtflecks in Abtastrichtung so groß, daß gerade noch die kleinsten für das anstehende Meßproblem noch interessierenden Wellenlängen aufgelöst werden können (Anspruch 6).

Die erfindungsgemäße Vorrichtung erlaubt nicht nur die Bestimmung der Gestaltsabweichung niedriger Ordnung, aus den Ausgangssignalen der einzelnen Lichtempfangselemente kann darüberhinaus die Rauhigkeit der Oberfläche ermittelt werden. Hierzu wird im einzelnen auf die DE—OS 30 37 622 verwiesen (Anspruch 8).

Die Verwendung von Photodioden als Lichtempfangselemente gemäß Anspruch 9 hat den Vorteil, daß Diodenzeilen mit geringer Breite der einzelnen Lichtempfangselemente und hoher Empfindlichkeit bei günstigen Preisden standardmäßig erhältlich sind.

Die Verdrehung der Achse der Lichtempfangselement-Zeile gegen die Abtastrichtung "Verkürzt in der Projektion" die Breite eines jeden einzelnen Lichtempfangselements in Richtung der Gestaltsabweichungen, so daß die Winkelempfindlichkeit ansteigt (Anspruch 10).

Die Verwendung einer Teleskopoptik erlaubt es, die Auflösung der erfindungsgemäßen Vorrichtung dadurch zu erhöhen, daß die reflektierte Lichtverteilung auf der Lichtempfängerzeile "gespreizt" wird.

Die Erfindung wird nachstehend anhand eines Ausführungsbeispiels unter Bezugnahme auf die Zeichnung näher beschrieben, in der zeigen:

Fig. 1 eine Erläuterung des erfindungsgemäßen Meßprinzips,

Fig. 2 den prinzipiellen Aufbau einer erfindungsgemäßen Vorrichtung,

Fig. 3 a und b Verlauf des Schwerpunkt der Streuverteilung an einer "pfeifenden" Statorwelle, und an einer Statorwelle, die keine Geräusche verursacht,

Fig. 4 a und b Fourier-Transformationen der in Fig. 3 dargestellten Ergebnisse, und

Fig. 5 a und b zum Vergleich die Ergebnis einer mechanischen Formprüfung an diesen Statorwellen.

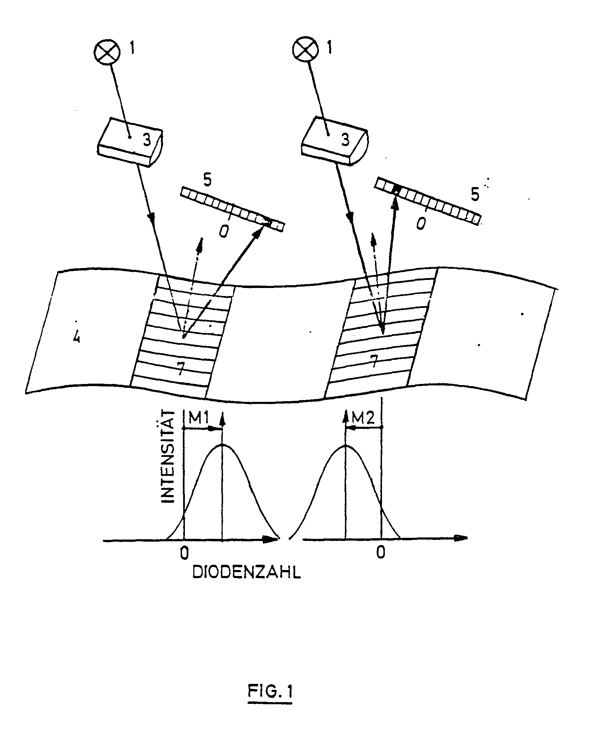

Fig. 1 zeigt eine Erläuterung des Meßprinzips. Der Strahl einer Lichtquelle 1 wird von einem Objektiv 3

4

auf eine zu untersuchende Oberfläche 4 abgebildet. Das reflektierte Licht trifft auf eine Diodenzeile 5 auf. Je nach Neigung der "welligen Oberfläche" liegt der Schwerpunkt des reflektierten Lichtbündels an einer anderen Stelle (M1 bzw. M2) auf der Diodenzeile 5. Das reflektierte Lichtbündel hat aufgrund der Rauhigkeit der Oberfläche 4 eine Verteilung, die schematisch in Fig. 1 dargestellt ist. Aufgrund dieser Verteilung, die sich von Oberflächenelement zu Oberflächenelement ändert, ist beispielsweise die Messung des Orts des reflektierten Lichtbündels mit einer Lichtwaage mit einem großen nicht korrigierbaren Fehler behaftet.

Angemarket soll noch werden, daß das Objektiv in Fig. 1 eine Zylinderlinse ist, so daß sich ein länglicher Meßfleck 7 ergibt.

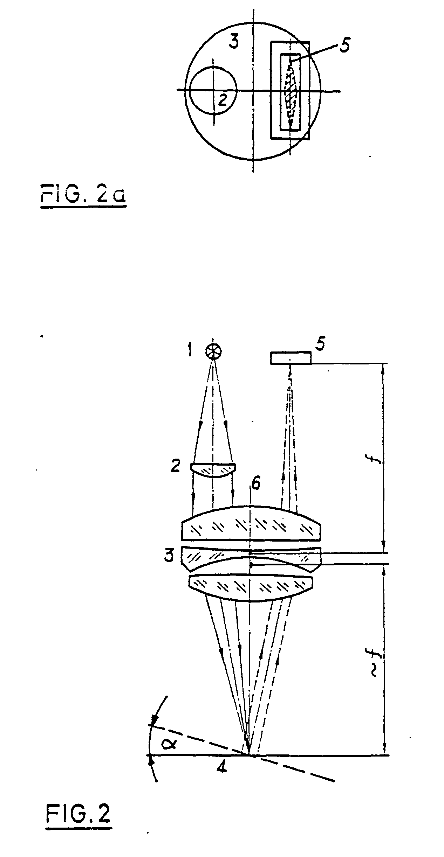

Fig. 2 zeigt einen Schnitt bzw. eine Ansicht von oben durch ein Ausführungsbeispiel einer erfindungsgemäßen Vorrichtung zur optischen Ermittlung von Oberflächenfehlern niedriger Ordnung. Die nur schematischen dargestellte Vorrichtung weist wiederum eine Lichtquelle 1, einen Kollimator 2, ein Meßobjektiv 3 und eine Diodenzeile 5 auf.

Die zu untersuchende Oberfläche 4 hat von der Vorrichtung, d.h. von der vorderen Hauptebene des Meßobjektivs 3, einen Abstand, der annähernd gleich der Brennweite f des Meßobjektivs ist. Das von der Lichtquelle 1, beispielsweise einem Laser oder einer Leuchtdiode ausgehende Licht, wird (gegebenenfalls) von dem Kollimator 2 parallelisiert und trifft außerhalb der optischen Achse 6 des Meßobjektivs 3 auf dieses auf. Der parallele Lichtstrahl wird von dem Meßobjektiv 3 auf der zu untersuchenden Oberfläche 4 fokussiert. Die von den einzelnen beleuchteten Punkten des Meßflecks ausgehenden Lichtstrahlen werden wiederum von dem Meßobjektiv 3 auf die Diodenzeile abgebildet. Der Abstand der Diodenzeile 5 von der hinteren Hauptebene des Meßobjektivs 3 ist dabei annähernd gleich der Brennweite des Meßobjektivs.

Aufgrund dieser räumlichen Zuordnung der zu untersuchenden Oberfläche zum Meßobjektiv bzw. des Meßobjektivs zur Diodenzeile werden die Lichtstrahlen, die von den einzelnen Punkten des Meßflecks auf der Oberfläche 4 unter einem bestimmten Winkel ausgehen, auf ein- und dieselbe Diode der Diodenzeile 5 abgebildet. Dies ist in Fig. 2 schematisch angedeutet. Anders ausgedrückt, bilden das Meßobjektiv 3 und die Probenoberfläche bzw. die Diodenzeile 5 ein Fourier-System.

Dabei hat es sich in der Praxis herausgestellt, daß Abstandsänderungen von bis zu 30% keinen nennenswerten Einfluß auf die Ermittelung der Oberflächenfehler niedriger Ordnung haben.

Die in der Aufsicht auf die erfindungsgemäße Vorrichtung auf der Diodenzeile 5 schematisch dargestellte Streulichtverteilung wird zur Bestimmung des Neigungswinkels des abgetasteten Flächenelements (in Fig. 2 gestrichelt dargestellt) gegen ein Referenzelement (durchgehende Linie 4 in Fig. 2) entsprechend der Beziehung

$$\alpha \cong \frac{1}{2} \tan(2\alpha) = \frac{b}{2\,n_{ges}.f} \sum_{j=-(k-1)}^{1} n_j x_j$$

bestimmt.

Hierbei ist

$$M = \sum_{j=-(k-1)}^{1} n_j x_j \Big/ n_{ges}$$

der im folgenden verwendete M-Wert, der proportional zur Schwerpunktlage des Lichtflecks auf der Diodenzeile ist.

In den Gleichungen bedeuten:

$$n_{ges} = \sum_{j=(k-1)}^{1} n_j$$

$k+1$ : Zahl der Lichtempfangselemente
$n_j$ : Amplitude des Ausgangssignals des Lichtempfangselements j
$b$ : Breite eines Lichtempfangselements
$f$ : Abstand der zeilenförmigen Anordnung der Lichtempfangselemente von dem untersuchten Flächenelement
$x_j$ : Abstand des Lichtempfangselements j vom Element "0", und
Element "0" : Lichtempfangselement, auf das das Licht bei "idealer" Reflexion am Referenzelement auftrifft.

Bei einer Auswertung der Ausgangssignale der einzelnen Dioden der Diodenzeile 5 nach der vorstehend angegebenen Beziehung kann in jedem Falle eine Veschiebung des Schwerpunkts der Streulichtverteilung um 1/10 der Breite b einer Diode aufgelöst werden. Die Auflösungsgrenze im praktischen Einsatz liegt bei ca 1/100 einer Diodenbreite b.

Beispielsweise kann man bei einer Diodenbreite b = 0,9 mm und einer Brennweite f des Meßobjektivs 3 von 25 mm einen Winkel von 6,2' auflösen, während man bei einer Brennweite von ca. 50 mm einen Winkel von 3,0' auflösen kann. Die Neigung des Strahls des Meßobjektivs gegen die optische Achse 6 beträgt dabei zwischen 10 und 20 Grad.

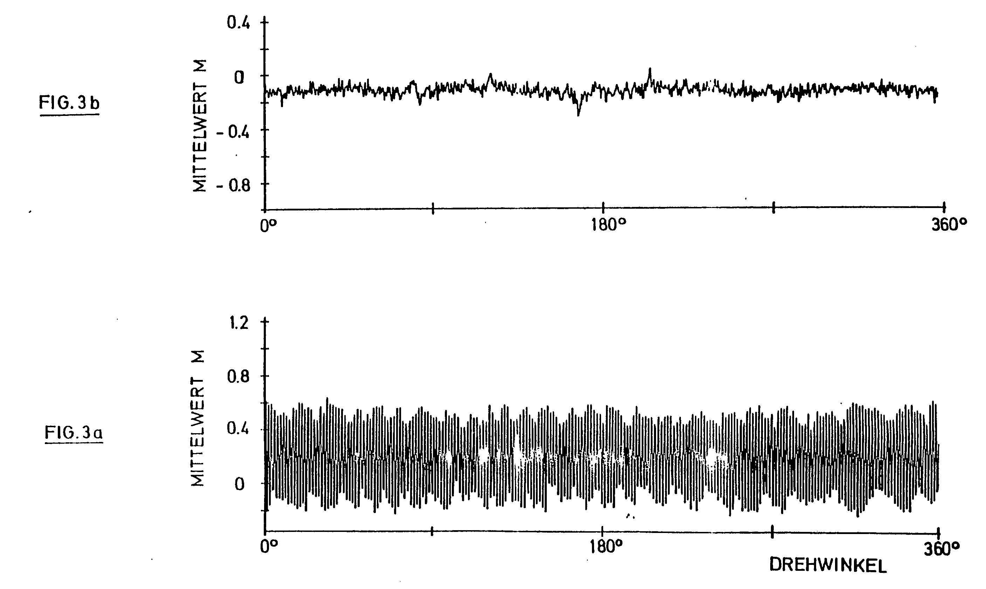

Fig. 3a zeigt den Verlauf des M-Werts, d.h. des Orts des Schwerpunkts des reflektierten Lichtbündels als Funktion des Drehwinkels einer Statorwelle, die im eingebauten Zustand Pfeifen verursacht, während Fig. 3b die Abhängigkeit des M-Werts für eine Statorwelle zeigt, die kein Pfeifen verursacht. Wie man sieht, liegt bei der Statorwelle, die Pfeifen verursacht, ein wesentlich veränderter optischer M-Signalverlauf vor: die Amplituden sind mehrfach größer und die Struktur regelmäßiger. Berechnet man als einfache Kenngröße für das Streuverhalten des M-Wertes dessen Standardabweichung für einwandfreie Welle Werte < 0,1, während die Standardabweichungen für "pfeifende" Wellen größer als 0,1 und typischwerweise größer als 0,15 sind.

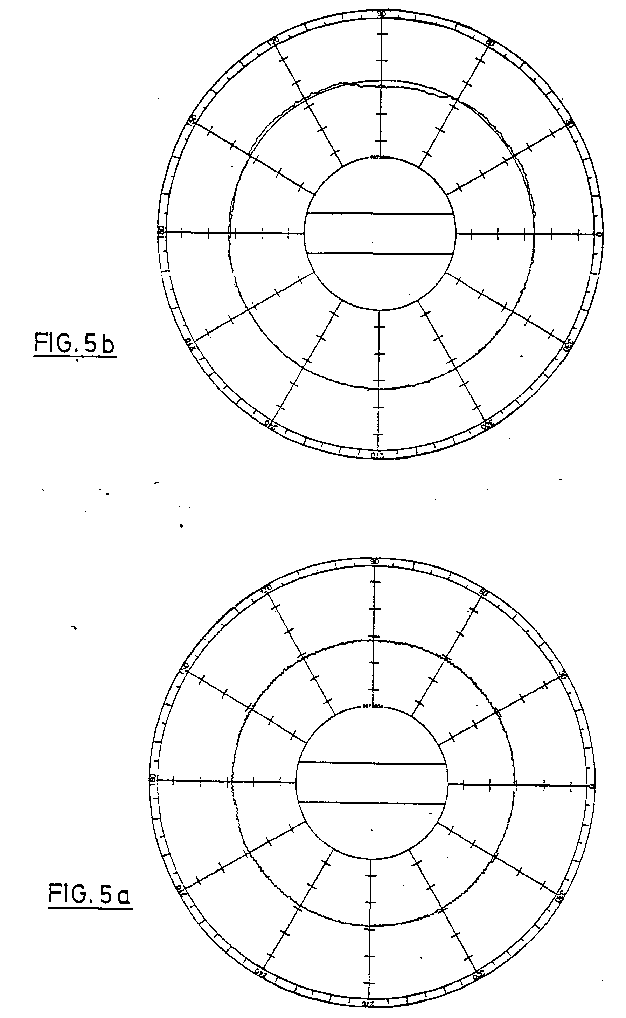

Die Fig. 5a und Fig. 5b zeigen die Ergebnisse mit einem Perthen-Formtester der Fa. Mahr für diese Wellen, Erstaunlicherweise ist die Rundheitsabweichung bei der einwandfreien Welle, d.h. der Welle, die im eingebauten Zustand kein Pfeifen verursacht, mit ca 4 µm größer als die Rundheitsabweichung bei der Pfeifen verursachenden Welle, deren Rundheitsabweichung ca. 2 µm beträgt.

Aus den Fig. 3 und 5 erkennt man, daß sich im Protokoll des mechanischen Formtestgeräts kein signifikanter Unterschied zeigt, wohl aber im M-Wert, der erfindungsgemäß ermittelt worden ist.

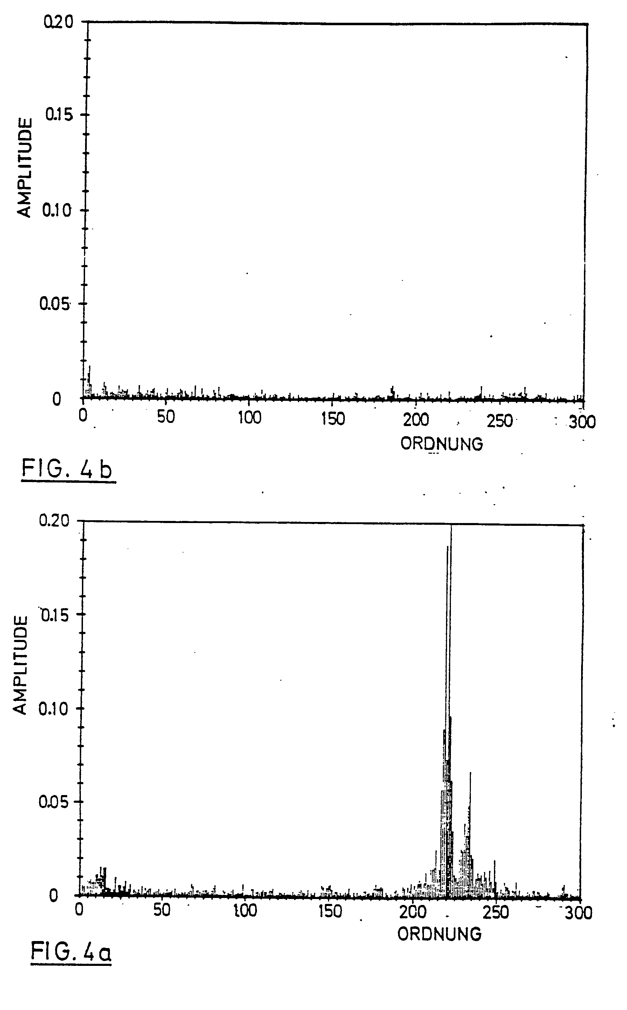

Auch bei der in den Fig. 4a und 4b dargestellten Fouriertransformierten des Meßergebnisses sieht man deutlich einen Unterschied zwischen Wellen, die Pfeifen verursachen und solchen, die keines verursachen. Bei einer systematischen Untersuchung hat sich herausgestellt, daß bestimmte Gestaltsfehler immer zu Maxima in bestimmten Ordnungen führen: Beispielsweise hatten alle Wellen, die Pfeifen verursachten, Maxima in ca. der 220. Ordnung.

Vorstehend ist die Erfindung exemplarisch beschrieben worden. Innerhalb der erfindungsgemäßen Grundgedanken sind die verschiedensten Modifikationen möglich:

Beispielsweise können die Achse der Lichtempfängerzeile und die Vorschubrichtung einen Winkel einschließen: Hierdurch wird die effektive Breite eines Lichtempfangselements herabgesetzt und damit die Auflösung vergrößert.

Ferner können die verschiedensten optischen Anordnungen verwendet werden; selbstverständlich ist es auch möglich, den Abtast-Lichtstrahl unter nahezu 90° auf die zu untersuchende Oberfläche auftreffen zu lassen. Auch können anstelle von sphärischen Abbildungselementen solche mit Zylinderwirkung verwendet werden, so daß die Spaltgeometrie in Abtastrichtung oder senkrecht hierzu dem Meßproblem angepaßt werden kann.

In jedem Falle hat die erfindungsgemäße Vorrichtung den Vorteil, daß es mit ihr möglich ist, auch über Nuten, Bohrungen etc. hingweg zu messen. Ferner können spezielle Oberflächengestaltungen softwäremäßig ausgeblendet werden.

**Patentansprüche**

1. Vorrichtung zur optischen Ermittlung von Gestaltsfehlern niedriger Ordnung mit einer Lichtquelle (1), deren Licht ein optisches System (2, 3) auf den zu untersuchenden Körper (4) richtet, einer Lichtempfangseinrichtung (5) für das vom Körper reflektierte Licht, die ein optisches Element und eine Vielzahl von zeilenförmig angeordneten Lichtempfangselementen (5) aufweist, aus deren Ausgangssignal eine Auswerteeinheit den Neigungswinkel des abgetasteten Flächenelements des Körpers bestimmt, dadurch gekennzeichnet, daß die Auswerteeinheit aus den Ausgangssignalen $n_j$ der Lichtempfangselemente den Neigungswinkel $\alpha$ des abgetasteten Flächenelements gegen ein Referenzelement in der Oberfläche des Körpers entsprechend der Beziehung

$$\alpha \simeq \frac{1}{2} \tan(2\alpha) = \frac{b}{2\, n_{ges.}f} \sum_{j=-(k-1)}^{1} n_j x_j$$

bestimmt, wobei bedeuten:

$$n_{ges} = \sum_{j=-(k-1)}^{1} n_j$$

| k+1 | : Zahl der Lichtempfangselemente |
| $n_j$ | : Amplitude des Ausgangssignals des Lichtempfangselements j |
| b | : Breite eines Lichtempfangselements |
| f | : Abstand der zeilenförmigen Anordnung der Lichtempfangselemente von dem untersuchten Flächenelement |
| $x_j$ | : Abstand des Lichtempfangselements j vom Element "0", und |
| Element "O" | : Lichtempfangselement, auf das das Licht bei "idealer" Reflexion am Referenzelement auftrifft. |

2. Vorrichtung nach Anspruch 1, dadurch gekennzeichnet, daß der Auswerteeinheit eine Integrationsschaltung nachgeschaltet ist, die zur Ermittlung der Profilkurve f(x) des Körpers das zum Neigungswinkel $\alpha$ des jeweiligen Flächenelements proportionale Ausgangssignal der Auswerteschaltung integriert.

3. Vorrichtung nach Anspruch 1 oder 2, dadurch gekennzeichnet, daß eine Transformationsschaltung vorgesehen ist, die das Ausgangssignal der Auswerteeinheit und/oder das Ausgangssignal der Integrationsschaltung einer Fourier-Transformation unterzieht.

4. Vorrichtung nach einem der Ansprüche 1 bis 3, dadurch gekennzeichnet, daß die Achse des die Oberfläche abtastenden Lichtrstrahls mit der Flächennormale der idealen Oberfläche einen Winkel ungleich Null einschließt, und daß zur Abbildung des reflektierten Lichts auf die Lichtempfangseinrichtung ein Linsensystem vorgesehen ist, dessen Abstand von der Oberfläche und von der Lichtempfangseinrichtung jeweils in etwa gleich der Brennweite des Linsensystems ist.

5. Vorrichtung nach einem der Ansprüche 1 bis 4, dadurch gekennzeichnet, daß der die Oberfläche abtastende Lichtfleck zur optischen Filterung von Rauheitseinflüssen senkrecht zur Abtastrichtung wesentlich größere Abmessungen als in Abtastrichtung hat.

6. Vorrichtung nach Anspruch 5, dadurch gekennzeichnet, daß die Abmessung des Lichtflecks in Abtastrichtung in etwa gleich der Wellenlänge der kleinsten noch aufzulösenden Gestaltsfehler ist.

7. Vorrichtung nach einem der Ansprüche 1 bis 4, dadurch gekennzeichnet, daß die Ausgangssignale der Lichtempfangselemente zusätzlich zur Bestimmung der Rauheit der untersuchten Oberfläche herangezogen werden.

8. Vorrichtung nach Anspruch 7, dadurch gekennzeichnet, daß die Auswerteeinheit aus den Ausgangssignalen der Lichtempfangselemente die Rauheit der Oberfläche nach den Gleichungen

$$S_x = \sum_{i=1}^{k+1} |w_i - \overline{w}|^x \cdot P_i \ ; \ x = 1 \text{ oder } 2 \qquad (a)$$

$$\overline{w} = \sum_{i=1}^{k+1} w_i \cdot P_i \qquad (b)$$

$$P_i = u_i \cdot g_i \left( \sum_{i=1}^{k-1} u_i g_i \right) \qquad (c)$$

ermittelt, wobei bedeuten,

$w_i$ : der von dem jeweiligen Lichtempfangselement erfaßte Winkel der Streustrahlung,
k+1 : die Zahl der Lichtempfangselemente,
w : der Mittelwert aus den Werten $P_i$ und $w_i$,
$P_i$ : das nach Gleichung c) normierte Meßsignal $n_i$, und
$g_i$ : Korrekturfaktoren für das Meßsignal $n_i$.

9. Vorrichtung nach einem der Ansprüche 1 bis 8, dadurch gekennzeichnet, daß die Lichtempfangseinrichtung eine Diodenzeile ist.

10. Vorrichtung nach einem der Ansprüche 1 bis 9, dadurch gekennzeichnet, daß die Achse der Lichtempfangselement-Zeile mit der Abtastrichtung einen spitzen Winkel einschließt.

11. Vorrichtung nach einem der Ansprüche 1 bis 10, gekennzeichnet durch eine Teleskopoptik, die das reflektierte Licht auf die Lichtempfangseinrichtung abbildet.

**Revendications**

1. Appareil pour la détermination optique de défauts de forme d'ordre inférieur, ce dispositif comportant:

une source lumineuse (1), dont la lumière est dirigée par un système optique (2, 3) sur le corps (4) à examiner,

un dispositif (5) récepteur de la lumière réfléchie par le corps, ce dispositif présentant un élément optique et un grand nombre d'éléments (5) récepteurs de lumière disposés en forme de lignes, qui émettent un signal de sortie à partir duquel une unité d'exploitation détermine l'angle d'inclinaison de l'élément, soumis à exploration, de la surface du corps,

appareil caractérisé en ce que l'unité d'exploitation détermine, à partir des signaux $n_j$ de départ des éléments récepteurs de lumière, l'angle $\alpha$ d'inclinaison de l'élément de surface soumis à balayage, par rapport à un élément de référence présent dans la surface du corps selon la relation:

$$\alpha \cong \frac{1}{2} \, tg \, (2\alpha) = \frac{b}{2 \, n_{ges.}f} \sum_{j \, = \, -(k-1)}^{1} n_j x_j$$

dans laquelle

$$n_{ges} = \sum_{j \, = \, (k-1)}^{1} n_j$$

$k+1$ : nombre des éléments récepteurs de lumière

$n_j$ : amplitude du signal de départ émis par l'élément j récepteur de lumière

$b$ : largeur d'un élément récepteur de lumière

$f$ : distance de l'agencement, en forme de lignes, des éléments récepteurs de lumière par rapport à l'élément de surface soumis à examen

$x_j$ : distance de l'élément j récepteur de lumière par rapport à l'élément "O", et

Element "O" : élément récepteur de lumière sur lequel la lumière parvient à l'élément de référence en cas de réflexion "idéale" ou "parfaite".

2. Appareil selon la revendication 1, caractérisé en ce que l'unité d'exploitation est suivie d'un circuit intégrateur, qui, pour déterminer la courbe de profil f(x) du corps, intègre le signal, sortant du circuit d'exploitation, et qui est proportionnel à l'angle $\alpha$ d'inclinaison de chaque élément de surface.

3. Appareil selon la revendication 1 ou 2, caractérisé en ce qu'il est prévu un circuit de transformation, qui soumet à une transformation de Fourier le signal sortant de l'unité d'exploitation et/ou le signal sortant du circuit d'intégration.

4. Appareil selon l'une des revendications 1 à 3, caractérisé en ce que l'axe du rayon lumineux explorant la surface englobe, avec la normale à la surface idéale, un angle différent de zéro et en ce que, pour former une image de la lumière réfléchie sur le dispositif récepteur de lumière, on prévoit un système de lentilles dont la distance, par rapport à la surface et par rapport au dispositif récepteur de lumière, est à chaque foit à peu près égale à la distance focale du système des lentilles.

5. Appareil selon l'une des revendications 1 à 4, caractérisé en ce que la tache lumineuse explorant la surface possède, pour filtrer optiquement les influences de la rugosité, perpendiculairement à la direction de l'exploration, des dimensions nettement plus grandes que dans la direction d'exploration.

6. Appareil selon la revendication 5, caractérisé en ce que la dimension de la tache lumineuse dans la direction d'exploration est approximativement égale à la longueur d'onde correspondant au plus petit défaut de forme pouvant encore être résolu.

7. Appareil selon l'une des revendications 1 à 4, caractérisé en ce qu'on fait en outre appel aux signaux émis par les éléments récapteurs de lumière pour déterminer la rugosité de la surface examinée.

8. Appareil selon la revendication 7, caractérisé en ce que l'unité d'exploitation détermine, à partir des signaux émis par les éléments récepteurs de lumière, la rugosité de la surface selon les équations:

$$S_x = \sum_{i=1}^{k+1} |w_i - \overline{w}|^x . P_i \; ; \; x = 1 \text{ ou } 2 \qquad (a)$$

$$\overline{w} = \sum_{i=1}^{k+1} w_i . P_i \qquad (b)$$

$$P_i = u_i . g_i \left| \sum_{i=1}^{k-1} u_i g_i \right) \qquad (c$$

dans lesquelles

w_l représente l'angle du rayonnement diffusé saisi par chaque élément récepteur de lumière,

k+1 représente le nombre des éléments récepteurs de lumière,

w représente la valeur moyenne obtenue à partir des valeurs P_l et w_l,

P_l représente le signal n_1 de mesure normalisé selon l'équation c), et

g_l représente les facteurs de correction pour le signal n_l de mesure.

9. Appareil selon l'une des revendications 1 à 8, caractérisé en ce que le dispositif récepteur de lumière est constitué par une rangée ou ligne de diodes.

10. Appareil selon l'une des revendications 1 à 9, caractérisé en ce que l'axe de la rangée ou ligne des éléments récepteurs de lumière forme un angle aigu avec la direction d'exploration.

11. Appareil selon l'une des revendications 1 à 10, caractérisé en ce qu'il comporte un dispositif optique télescopique, qui forme l'image de la lumière réfléchie sur le dispositif récepteur de lumière.

**Claims**

1. Device for the optical detection of form errors of a low order with

a light source (1) whose light directs an optical system (2, 3) onto the body to be examined,

a light-receiving device (5) for the light reflected from the body with an optical element and a number of light-receiving elements (5) in a linear array whose output signals are taken by an evaluation unit to determine the inclination angle of the scanned surface element of the body, characterised by the fact that the evaluation unit determines the inclination angle $\alpha$ of the surface element scanned from the output signals $n_j$ of the light-receiving elements against a reference element in the surface of the body in accordance with the equation:

$$\alpha \cong \frac{1}{2} \tan (2\alpha) = \frac{b}{2 \, n_{ges.}f} \sum_{j=-(k-1)}^{1} n_j x_j$$

where

$$n_{ges} = \sum_{j=-(k-1)}^{1} :n_j$$

| | |
|---|---|
| k+1 | : a number of light-receiving elements |
| $n_j$ | : amplitude of the output signal of the light-receiving element j |
| b | : width of a light-receiving element |
| f | : distance of the linear array of light receiving elements from the surface element examined |
| $x_j$ | : distance of the light-receiving element j from the element "O", and |
| Element "O" | : light-receiving element on which the light is incident with an "ideal" reflection on the reference element. |

2. Device according to claim 1, characterised by the fact that an integration circuit is connected subsequent to the evaluation unit which integrates the output signal of the evaluation circuit proportional to the inclination angle of each surface element in order to determine the profile curve f(x) of the body.

3. Device according to claims 1 or 2, characterised by the fact that a transformation circuit is provided which subjects the output signal of the evaluation unit and/or the output signal of the integration circuit to a Fourier transformation.

4. Device according to any of the claims 1 to 3, characterised by the fact that the axis of the light beam scanning the surface encloses an angle other than zero with the surface normal of the ideal surface, and that for the imaging of the reflected light onto the light-receiving device a lens system is provided whose distance from the surface and from the light-receiving device is, in each case, approximately equal to the focal length of the system.

5. Device according to any of the claims 1 to 4, characterised by the fact that the light spot scanning the surface shows considerably greater dimensions perpendicular to the scanning direction than in the scanning direction for an optical filtering of roughness influences.

6. Device accordiong to claim 5, characterised by the fact that the dimension of the light spot in the scanning direction is approximately equal to the wavelength of the finest form error which can still be resolved.

7. Device according to any of claims 1 to 4, characterised by the fact that the output signals of the light-receiving elements are also used for the determination of the roughness of the surface examined.

8. Device according to claim 7, characterised by the fact that the evaluation unit determines the roughness of the surface from the output signals of the light-receiving elements according to the equations

$$S_x = \sum_{i=1}^{k+1} |w_i - \bar{w}|^x \cdot P_i \; ; \; x = 1 \text{ or } 2 \qquad (a)$$

$$\bar{w} = \sum_{i=1}^{k+1} w_i \cdot P_i \qquad (b)$$

$$P_i = u_i \cdot g_i \Big/ \left( \sum_{i=1}^{k-1} u_i g_i \right) \qquad (c)$$

where,

$w_i$ : the angle of scattered light obtained from each light-receiving element,

$k+1$ : the number of light-receiving elements

$w$ : the mean value from the values $P_i$ and $w_i$,

$P_i$ : the measuring signal $n_i$ normed according to equation (c), and

$g_i$ : correction factors for the measuring signal $n_i$.

9. Device according to any of the claims 1 to 8, characterised by the fact that the light-receiving element is a diode array.

10. Device according to any of the claims 1 to 9, characterised by the fact that the axis of the light-receiving element array encloses an acute angle with the scanning direction.

11. Device according to any of the claims 1 to 10, characterised by a telescopic optic which images the reflected light onto the light-receiving device.

FIG. 1

FIG. 2a

FIG. 2

2

FIG. 3 b

FIG. 3 a

EP 0 210 263 B1

FIG. 4 b

FIG. 4 a

FIG. 5 b

FIG. 5 a